# FASCICULE DE BREVET EUROPEEN

(11) **EP 1 892 039 B1**
(45) Date de publication et mention de la délivrance du brevet: **27.03.2019**
(21) Numéro de dépôt: 07290894.0
(22) Date de dépôt: 17.07.2007
(51) Int. Cl.: B01J 27/19, B01J 23/882, B01J 37/02, B01J 35/10

(54) **Procédé d'hydrodesulfuration de coupes contenant des composés soufrés et des oléfines en présence d'un catalyseur supporté comprenant des éléments des groupes VIII et VIB**
Verfahren zur Hydrodesulfurierung von Fraktionen, die Schwefelverbindungen und Olefine enthalten, mit Hilfe eines unterstützten Katalysators, der Elemente der VIII- und VIB-Gruppen enthält
Method of hydrodesulfuration of cuts containing sulphur compounds and olefins in the presence of a supported catalyst comprising elements from groups VIII and VIB

(30) Priorité: 28.07.2006 FR 0607057
(43) Date de publication de la demande: 27.02.2008
(73) Titulaire: IFP Energies nouvelles, 92500 Rueil-Malmaison (FR)
(72) Inventeur: Devers, Elodie, 69008 Lyon (FR); Bouchy, Christophe, 69007 Lyon (FR); Marchal-George, Nathalie, 69230 Saint-Génis-Laval (FR); Picard, Florent, 69360 Communay (FR)
(74) Mandataire: IFP Energies nouvelles

(56) Documents cités:
- EP-A2- 0 714 699
- FR-A1- 2 315 533
- GB-A- 1 313 005
- US-A- 3 840 472
- US-A- 4 039 476
- US-A- 4 455 390
- US-A- 5 403 806
- US-A1- 2004 186 013
- US-A1- 2005 261 124

## Description

L'invention concerne un catalyseur comprenant au moins un support, du molybdène, du cobalt et du phosphore dans lequel la densité en molybdène par unité de surface du support est comprise (bornes incluses) entre 3.10⁻⁴ et 14.10⁻⁴ g d'oxydes de molybdène par m² de support, dans lequel le rapport molaire phosphore sur molybdène est compris (bornes incluses) entre 0,27 et 2,00, dans lequel la teneur en molybdène est comprise (bornes incluses) entre 1 et 20 % poids d'oxydes de molybdène, la teneur en cobalt est comprise (bornes incluses) entre 0,3 et 5 % poids d'oxydes de cobalt, la teneur en phosphore est comprise (bornes incluses) entre 0,2 et 5 % poids de P₂O₅, dans lequel le support du catalyseur comprend au moins 90 % poids d'alumine de transition et le support a une surface spécifique inférieure à 100 m²/g. L'invention concerne également le procédé permettant l'hydrodésulfuration de charges hydrocarbonées, de préférence de type essences de craquage catalytique.

### ART ANTERIEUR

Les coupes essences et plus particulièrement les essences issues du FCC contiennent environ 20 à 40 % de composés oléfiniques, 30 à 60 % d'aromatiques et 20 à 50 % de composés saturés de type paraffines ou naphtènes. Parmi les composés oléfiniques, les oléfines ramifiées sont majoritaires par rapport aux oléfines linéaires et cycliques. Ces essences contiennent également des traces de composés hautement insaturés de type dioléfiniques et qui sont susceptibles de désactiver les catalyseurs par formation de gommes. Ainsi, le brevet EP 685 552 B1 propose d'hydrogéner sélectivement les dioléfines, c'est à dire sans transformer les oléfines, avant d'effectuer l'hydrotraitement pour l'élimination du soufre. La teneur en composés soufrés de ces essences est très variable en fonction du type d'essence (vapocraqueur, craquage catalytique, cokéfaction...) ou dans le cas du craquage catalytique de la sévérité appliquée au procédé. Elle peut fluctuer entre 200 et 5000 ppm de S, de préférence entre 500 et 2000 ppm par rapport à la masse de charge. Les familles des composés thiophéniques et benzothiophéniques sont majoritaires, les mercaptans n'étant présents qu'à des niveaux très faibles généralement compris entre 10 et 100 ppm. Les essences de FCC contiennent également des composés azotés dans des proportions n'excédant généralement pas 100 ppm.

La production d'essences reformulées répondant aux nouvelles normes d'environnement nécessite notamment que l'on diminue le moins possible leur concentration en oléfines afin de conserver un indice d'octane élevé, mais que l'on diminue de façon importante leur teneur en soufre. Ainsi, les normes environnementales en vigueur et futures contraignent les raffineurs à diminuer la teneur en soufre dans les essences à des valeurs inférieures ou au plus égales à 50 ppm en 2005 et 10 ppm au-delà de 2010. Ces normes concernent la teneur totale en soufre mais également la nature des composés soufrés tels que les mercaptans. Les essences de craquage catalytique, qui peuvent représenter 30 à 50 % du pool essence, présentent des teneurs en oléfines et en soufre élevées. Le soufre présent dans les essences reformulées est imputable, à près de 90 %, à l'essence de FCC. La désulfuration (l'hydrodésulfuration) des essences et principalement des essences de FCC est donc d'une importance évidente pour le respect des spécifications. L'hydrotraitement (ou hydrodésulfuration) des essences de craquage catalytique, lorsqu'il est réalisé dans des conditions classiques connues de l'homme du métier permet de réduire la teneur en soufre de la coupe. Cependant, ce procédé présente l'inconvénient majeur d'entraîner une chute très importante de l'indice d'octane de la coupe, en raison de la saturation de l'ensemble des oléfines au cours de l'hydrotraitement. Il a donc été proposé des procédés permettant de désulfurer profondément les essences de FCC tout en maintenant l'indice d'octane à un niveau élevé.

Ainsi, le brevet US 5 318 690 propose un procédé consistant à fractionner l'essence, adoucir la fraction légère et à hydrotraiter la fraction lourde sur un catalyseur conventionnel puis à la traiter sur une zéolithe ZSM5 pour retrouver approximativement l'indice d'octane initial.

La demande de brevet WO 01/40409 revendique le traitement d'une essence de FCC dans des conditions de haute température, faible pression et fort ratio hydrogène/charge. Dans ces conditions particulières, les réactions de recombinaison conduisant à la formation des mercaptans, mettant en jeu l'H₂S formé par la réaction de désulfuration et les oléfines sont minimisées.

Enfin, le brevet US 5 968 346 propose un schéma permettant d'atteindre des teneurs résiduelles en soufre très faibles par un procédé en plusieurs étapes : hydrodésulfuration sur un premier catalyseur, séparation des fractions liquides et gazeuses, et second hydrotraitement sur un deuxième catalyseur. La séparation liquide/gaz permet d'éliminer l'H₂S formé dans le premier réacteur, afin d'aboutir à un meilleur compromis entre hydrodésulfuration et perte octane.

L'obtention de la sélectivité de réaction recherchée (ratio entre hydrodésulfuration et hydrogénation des oléfines) peut donc être en partie due au choix du procédé mais dans tous les cas l'utilisation d'un système catalytique intrinsèquement sélectif est très souvent un facteur clé.

D'une façon générale, les catalyseurs utilisés pour ce type d'application sont des catalyseurs de type sulfure contenant un élément du groupe VIB (Cr, Mo, W) et un élément du groupe VIII (Fe, Ru, Os, Co, Rh, Ir, Pd, Ni, Pt). Ainsi dans le brevet US 5 985 136, il est revendiqué qu'un catalyseur présentant une concentration de surface comprise entre 0,5.10⁻⁴ et 3.10⁻⁴ gMoO₃/m² permet d'atteindre des sélectivités élevées en hydrodésulfuration (93 % d'hydrodésulfuration (HDS) contre 33 % d'hydrogénation des oléfines (HDO)). Par ailleurs, selon les brevets US 4140626 et US 4 774 220, il peut être avantageux d'ajouter un dopant (alcalin, alcalino-terreux) à la phase sulfure conventionnelle (CoMoS) dans le but de limiter l'hydrogénation des oléfines.

Une autre voie permettant d'améliorer la sélectivité intrinsèque des catalyseurs est de tirer bénéfice de la présence de dépôts carbonés à la surface du catalyseur. Ainsi, le brevet US 4 149 965 propose de prétraiter un catalyseur conventionnel d'hydrotraitement de naphta pour le désactiver partiellement avant son utilisation pour l'hydrotraitement des essences. De même, la demande de brevet EP 0 745 660 A1 indique que le prétraitement d'un catalyseur afin de déposer entre 3 et 10 % poids de coke améliore les performances catalytiques. Dans ce cas, il est précisé que le ratio C/H ne doit pas être supérieur à 0,7.

Afin d'améliorer la sélectivité, il est également possible d'optimiser la densité d'oxyde d'élément du groupe VIB par mètre carré de support. Ainsi la demande de brevet US 2004/0007504 préconise des valeurs de densité surfacique comprises entre 4.10⁻⁴ et 36.10⁻⁴ g d'oxyde d'élément du groupe VIB par m² de support.

Par ailleurs, une autre voie permettant d'améliorer la sélectivité intrinsèque des catalyseurs est d'ajouter du phosphore sur le support. La demande brevet US 2005/0261124 A1 propose l'ajout de phosphore dans des proportions allant de 1 à 23% poids en P₂O₅ par rapport au poids du catalyseur et le brevet US 6,746,598 B1 des proportions allant de 0,1 à10%. Le phosphore est également utilisé comme dopant de l'activité d'hydrodésulfuration de charges hydrocarbonées comme illustré par le brevet US 4,880,525 ou par le brevet US 5,246,569.

Les documents US 5 403 806 et US4 4 455 390 décrivent des catalyseurs pouvant contenir du molybdène, du cobalt et du phosphore.

### RESUME DE L'INVENTION

Dans la présente invention, il a été trouvé un catalyseur utilisable dans un procédé d'hydrodésulfuration d'essence et permettant de réduire les teneurs en soufre total et en mercaptans des coupes hydrocarbonées et de préférence de coupes essences de FCC, sans perte importante d'essence et en minimisant la diminution de l'indice d'octane.

L'invention concerne un catalyseur comprenant au moins un support, du molybdène, du cobalt et du phosphore dans lequel la densité en molybdène par unité de surface du support est comprise (bornes incluses) entre 3.10⁻⁴ et 14.10⁻⁴ g d'oxydes de molybdène par m² de support, dans lequel le rapport molaire phosphore sur molybdène est compris (bornes incluses) entre 0,27 et 2,00, dans lequel la teneur en molybdène est comprise (bornes incluses) entre 1 et 20 % poids d'oxydes de molybdène, la teneur en cobalt est comprise (bornes incluses) entre 0,3 et 5 % poids d'oxydes de cobalt, la teneur en phosphore est comprise (bornes incluses) entre 0,2 et 5 % poids de P₂O₅, dans lequel le support du catalyseur comprend au moins 90 % poids d'alumine de transition et le support a une surface spécifique inférieure à 100 m²/g.

L'invention concerne également le procédé permettant l'hydrodésulfuration de charges hydrocarbonées, de préférence de type essences de craquage catalytique.

### DESCRIPTION DETAILLEE DE L'INVENTION

La présente invention vise à l'obtention de catalyseur ayant une activité donnée et une sélectivité donnée en vue de leur emploi dans les procédés d'hydrotraitement. Les valeurs d'activité et de sélectivité sont normalisées en prenant le catalyseur 1 des exemples (voir tableau ci-dessous) comme référence.

La méthode suivante est utilisée pour évaluer l'activité et la sélectivité des catalyseurs: une charge modèle représentative d'une essence de craquage catalytique (FCC) contenant un composé soufré et une oléfine est utilisée pour l'évaluation des différents catalyseurs qui sont préalablement sulfurés ex-situ en phase gaz. La réaction est réalisée en réacteur fermé de type Grignard. Des échantillons sont prélevés à différents intervalles de temps et sont analysés par chromatographie en phase gazeuse de façon à observer la disparition des réactifs.

L'activité est exprimée en constante de vitesse k_{HDS} de la réaction d'hydrodésulfuration (HDS), normalisée par volume de catalyseur sous forme oxyde, en supposant un ordre 1 par rapport aux composés soufrés. La sélectivité est exprimée en rapport normalisé des constantes de vitesse k_{HDS}/k_{HDO}, k_{HDO} étant la constante de vitesse pour la réaction d'hydrogénation des oléfines (HDO), normalisée par volume de catalyseur sous forme oxyde, en supposant un ordre 1 par rapport aux oléfines.

Toutes les valeurs d'activité et de sélectivité sont normalisées en prenant le catalyseur 1 dont les caractéristiques sont mentionnées ci-dessous comme référence et en prenant k_{HDS}/k_{HDO}=100 et k_{HDS}=100.

| Catalyseur | Densité g MoO₃/m² | % pds CoO | % pds MoO₃ | % pds P₂O₅ | P / Mo | S BET m²/g | k_{HDS}/ k_{HDO} | k_{HDS} |
|---|---|---|---|---|---|---|---|---|
| 1 (référence) | 7,6. 10⁻⁴ | 2,9 | 10,3 | 0 | 0 | 135 | 100 | 100 |

Les catalyseurs selon la présente invention ont une sélectivité (k_{HDS}/k_{HDO} en valeur normalisée) supérieure ou égale à 110, de préférence supérieure ou égale à 119, de manière plus préférée supérieure ou égale à 122 et de manière encore plus préférée supérieure ou égale à 127.

Les catalyseurs selon la présente invention ont une activité (k_{HDS} en valeur normalisée) supérieure ou égale à 71, de préférence supérieure ou égale à 73, de manière plus préférée supérieure ou égale à 74 et de manière encore plus préférée supérieure ou égale à 82.

Les catalyseurs selon l'invention sont des catalyseurs comprenant au moins un support, du molybdène, du cobalt et du phosphore dans lequel la densité en molybdène par unité de surface du support est comprise (bornes incluses) entre 3.10⁻⁴ et 14.10⁻⁴ g d'oxydes de molybdène par m² de support, dans lequel le rapport molaire phosphore sur molybdène est compris (bornes incluses) entre 0,27 et 2,00, dans lequel la teneur en molybdène est comprise (bornes incluses) entre 1 et 20 % poids d'oxydes de molybdène, la teneur en cobalt est comprise (bornes incluses) entre 0,3 et 5 % poids d'oxydes de cobalt, la teneur en phosphore est comprise (bornes incluses) entre 0,2 et 5 % poids de P₂O₅, dans lequel le support du catalyseur comprend au moins 90 % poids d'alumine de transition et le support a une surface spécifique inférieure à 100 m²/g.

La teneur en molybdène est comprise (bornes incluses) entre 1 et 20 % poids d'oxydes de molybdène, de manière plus préférée (bornes incluses) entre 1,5 et 18 % poids d'oxydes de molybdène, de manière très préférée (bornes incluses) entre 2 et 15 % poids d'oxydes de molybdène, de manière encore plus préférée (bornes incluses) entre 2,5 et 12 % poids d'oxydes de molybdène.

La teneur en cobalt du catalyseur selon l'invention est comprise (bornes incluses) entre 0,3 et 5 % poids d'oxydes de cobalt.

Le rapport molaire cobalt sur molybdène peut être compris (bornes incluses) entre 0,1 et 0,8, de préférence (bornes incluses) entre 0,2 et 0,6, de manière encore plus préférée (bornes incluses) entre 0,3 et 0,5.

La teneur en phosphore est comprise (bornes incluses) entre 0,2 et 5 % poids de P₂O₅, de manière préférée (bornes incluses) entre 0,3 et 4 % poids de P₂O₅, de manière encore plus préférée (bornes incluses) entre 0,35 et 3 % poids de P₂O₅.

Le rapport molaire phosphore sur molybdène est compris (bornes incluses) entre 0,27 et 2,00, de manière encore plus préférée compris (bornes incluses) entre 0,35 et 1,40, de manière très préférée compris (bornes incluses) entre 0,45 et 1,10, de manière encore plus préférée compris (bornes incluses) entre 0,45 et 1,00, voire compris (bornes incluses) entre 0,50 et 0,95.

Le support est essentiellement constitué par au moins une alumine de transition, c'est-à-dire qu'il comprend au moins 90 % poids d'alumine de transition. Il peut éventuellement être constitué uniquement d'une alumine de transition.

La surface spécifique du support selon l'invention est inférieure à 100 m²/g et voire même inférieure à 85 m²/g. Le support peut être préparé en utilisant tout précurseur, toute méthode de préparation et tout outil de mise en forme connu de l'homme de métier.

Le catalyseur selon l'invention peut être préparé au moyen de toute technique connu de l'homme du métier, et notamment par imprégnation des éléments des groupes VIII et VIB sur le support sélectionné. Cette imprégnation peut par exemple être réalisée selon le mode connu de l'homme du métier sous la terminologie d'imprégnation à sec, dans lequel on introduit juste la quantité d'éléments désirés sous forme de sels solubles dans le solvant choisi, par exemple de l'eau déminéralisée, de façon à remplir aussi exactement que possible la porosité du support. Le support ainsi rempli par la solution est de préférence séché.

L'ajout de phosphore peut se faire en même temps que l'ajout des sels métalliques lors de l'imprégnation à sec sur le support.

Après introduction des éléments des groupes VIII et VIB, et éventuellement une mise en forme du catalyseur, celui-ci subit un traitement d'activation. Ce traitement a généralement pour but de transformer les précurseurs moléculaires des éléments en phase oxyde. Il s'agit dans ce cas d'un traitement oxydant mais une réduction directe peut également être effectuée. Dans le cas d'un traitement oxydant, également appelé calcination, celui-ci est généralement mis en oeuvre sous air ou sous oxygène dilué, et la température de traitement est généralement comprise entre 200°C et 550°C, de préférence entre 300°C et 500°C. Dans le cas d'un traitement réducteur, celui-ci est généralement mis en oeuvre sous hydrogène pur ou de préférence dilué, et la température de traitement est généralement comprise entre 200°C et 600°C, de préférence entre 300°C et 500°C.

Des sels de métaux des groupes VIB et VIII utilisables dans le procédé selon l'invention sont par exemple le nitrate de cobalt, le nitrate de nickel, l'heptamolybdate d'ammonium ou le métatungstate d'ammonium. Tout autre sel connu de l'homme du métier présentant une solubilité suffisante et décomposable lors du traitement d'activation peut également être utilisé.

Le phosphore pourra être ajouté sous forme d'acide phosphorique.

Le catalyseur est habituellement utilisé sous une forme sulfurée obtenue après traitement en température au contact d'un composé organique soufré décomposable et générateur d'H₂S ou directement au contact d'un flux gazeux d'H₂S dilué dans H₂. Cette étape peut être réalisée in situ ou ex situ (en dedans ou dehors du réacteur) du réacteur d'hydrodésulfuration à des températures comprises entre 200 et 600°C et plus préférentiellement entre 300 et 500°C.

Le catalyseur selon l'invention peut être utilisé dans tout procédé, connu de l'homme du métier, permettant de désulfurer des coupes hydrocarbonées, par exemple des essences de craquage catalytique. Il peut être mis en oeuvre dans tout type de réacteur opéré en lit fixe ou en lit mobile ou en lit bouillonnant, il est toutefois de préférence utilisé dans un réacteur opéré en lit fixe.

La charge à hydrotraiter (ou hydrodésulfurer) au moyen du procédé selon l'invention est généralement une coupe essence contenant du soufre, telle que par exemple une coupe issue d'une unité de cokéfaction (coking selon la terminologie anglo-saxonne), de viscoréduction (visbreaking selon la terminologie anglo-saxonne), de vapocraquage (steam cracking selon la terminologie anglo-saxonne) ou de craquage catalytique (Fluid Catalytic Cracking selon la terminologie anglo-saxonne). La dite charge est de préférence constituée d'une coupe essence issue d'une unité de craquage catalytique dont la gamme de points d'ébullition s'étend typiquement des points d'ébullition des hydrocarbures à 5 atomes de carbone jusqu'à environ 250°C. Cette essence peut éventuellement être composée d'une fraction significative d'essence provenant d'autres procédés de production telle que la distillation atmosphérique (essence issue d'une distillation directe (ou essence straight run selon la terminologie anglo-saxonne) ou de procédés de conversion (essence de cokéfaction ou de vapocraquage).

A titre indicatif, les conditions opératoires permettant une hydrodésulfuration sélective des essences de craquage catalytique sont une température comprise entre environ 200 et environ 400°C, préférentiellement entre 250 et 350°C, une pression totale comprise entre 1 MPa et 3 MPa et plus préférentiellement entre 1 MPa et environ 2,5 MPa avec un ratio volume d'hydrogène par volume de charge hydrocarbonée, compris entre 100 et 600 litres par litre et plus préférentiellement entre 200 et 400 litres par litre. Enfin, la Vitesse Volumique Horaire (VVH) est l'inverse du temps de contact exprimée en heure. Elle est définie par le rapport du débit volumique de charge hydrocarbonée liquide par le volume de catalyseur chargé dans le réacteur. Elle est généralement comprise entre 1 et 10 h⁻¹, préférentiellement entre 2 et 8 h⁻¹.

### EXEMPLES

### Préparation des catalyseurs :

Tous les catalyseurs sont préparés selon la même méthode qui consiste à réaliser une imprégnation à sec d'une solution aqueuse préparée à partir d'oxyde de molybdène, d'hydroxyde de cobalt et d'acide phosphorique, le volume de la solution contenant les précurseurs des métaux et de phosphore étant rigoureusement égal au volume poreux de la masse de support. Les supports utilisés sont des alumines de transition présentant des couples (surface spécifique, volume poreux) de (135 m²/g, 1,12 cm³/g) ou (81 m²/g, 1,08 cm³/g). Les concentrations en précurseurs de la solution aqueuse sont ajustées de manière à déposer sur le support les teneurs pondérales souhaitées. Le catalyseur est ensuite séché pendant 12 heures à 120°C puis calciné sous air à 500°C pendant 2 heures.

### Évaluation des performances catalytiques :

Dans une première série d'exemples, une charge modèle représentative d'une essence de craquage catalytique (FCC) contenant 10 % poids de 2,3-diméthylbut-2-ène et 0,33 % poids de 3-méthylthiophène (soit 1000 ppm de soufre par rapport à la charge) est utilisée pour l'évaluation des différents catalyseurs. Le solvant utilisé est l'heptane. Les catalyseurs sont préalablement sulfurés ex-situ en phase gaz à 500°C pendant 2h sous flux d'H₂S dans H₂ (15%).

La réaction est réalisée en réacteur fermé de type Grignard sous 3,5 MPa de pression d'hydrogène, à 250°C. Des échantillons sont prélevés à différents intervalles de temps et sont analysés par chromatographie en phase gazeuse de façon à observer la disparition des réactifs.

L'activité est exprimée en constante de vitesse k_{HDS} de la réaction d'hydrodésulfuration (HDS), normalisée par volume de catalyseur sous forme oxyde, en supposant un ordre 1 par rapport aux composés soufrés. La sélectivité est exprimée en rapport normalisé des constantes de vitesse k_{HDS}/k_{HDO}, k_{HDO} étant la constante de vitesse pour la réaction d'hydrogénation des oléfines (HDO), normalisée par volume de catalyseur sous forme oxyde, en supposant un ordre 1 par rapport aux oléfines.

Les valeurs sont normalisées en prenant le catalyseur 1 comme référence et en prenant k_{HDS}/k_{HDO}=100 et k_{HDS}=100.

Dans une deuxième série d'exemples, une essence de craquage catalytique (FCC) dont les caractéristiques sont rassemblées dans le tableau 1, est traitée par différents catalyseurs. La réaction est effectuée en faisant varier la température en réacteur de type lit traversé dans les conditions suivantes :
- P= 1,5 MPa, H₂/charge= 400 litres/litres de charge hydrocarbonée, VVH = 4 h⁻¹.
- La température est variable (265 à 275°C) afin de comparer les sélectivités obtenues (rapport k_{HDS}/k_{HDO}) à iso conversion en hydrodésulfuration, soit pour une conversion en hydrodésulfuration égale à environ 94 % pour tous les catalyseurs. Les catalyseurs sont préalablement traités à 350°C par une charge contenant 2 % poids de soufre sous forme de DMDS (diméthyldisulfure) pour assurer la sulfuration des phases oxydes. Dans tous les cas, l'analyse des composés soufrés organiques résiduels se fait après élimination de l'H₂S issu de la décomposition. Les effluents sont analysés par chromatographie en phase gazeuse pour la détermination des concentrations en hydrocarbures et par la méthode décrite par la norme NF M 07075 pour la détermination du soufre total.

Les résultats sont exprimés en rapport de constante de vitesse k_{HDS}/k_{HDO} en supposant un ordre 1 par rapport aux composés soufrés pour la réaction d'hydrodésulfuration (HDS) et un ordre 1 par rapport aux oléfines pour la réaction d'hydrogénation des oléfines (HDO).

Les valeurs sont normalisées en prenant le catalyseur 1 comme référence et en prenant k_{HDS}/k_{HDO}=100 et k_{HDS}=100.

**Tableau 1 : Caractéristiques de la coupe essence de FCC.**

| S ppm | 635 |
|---|---|
| Aromatiques %pds | 34,5 |
| Paraffines et Naphténiques (% pds) | 39,5 |
| Oléfines %pds | 26,0 |
| PI °C | 40 |
| PF°C | 246 |

### Exemple 1 (selon l'invention) :

Les catalyseurs selon l'invention sont préparés selon la procédure décrite précédemment et leurs caractéristiques (densité en gramme d'oxyde de molybdène par mètre carré de support, teneurs en oxydes de cobalt, de molybdène et de phosphore du catalyseur calciné, rapport molaire P/Mo, surface BET du support) sont rassemblées dans le tableau 2. Les sélectivités k_{HDS}/k_{HDO} et l'activité en hydrodésulfuration k_{HDS} obtenues sur charge modèle en réacteur fermé sont également reportées dans ce tableau.

Tous ces catalyseurs sont conformes à la présente invention et présentent une activité (k_{HDS} en valeur normalisée) supérieure ou égale à 71 et une sélectivité (k_{HDS}/k_{HDO} en valeur normalisée) supérieure ou égale à 110.

**Tableau 2 : Caractéristiques et performances sur charge modèle des catalyseurs selon l'invention.**

| Catalyseur | Densité g MoO₃/m² | % pds CoO | % pds MoO₃ | % pds P₂O₅ | P/Mo mol/mol | S BET du support m²/g | k_{HDS}/k_{HDO} | k_{HDS} |
|---|---|---|---|---|---|---|---|---|
| 1 (référence) | 7,6. 10⁻⁴ | 2,9 | 10,3 | 0 | 0 | 135 | 100 | 100 |
| 2 | 12,4. 10⁻⁴ | 2,1 | 10,1 | 1,3 | 0,27 | 81 | 119 | 110 |
| 3 | 13,4. 10⁻⁴ | 2,1 | 10,8 | 4,7 | 0,87 | 81 | 134 | 73 |
| 4 | 9,5. 10⁻⁴ | 1,4 | 7,7 | 2,0 | 0,53 | 81 | 133 | 92 |
| 5 | 3,9. 10⁻⁴ | 0,6 | 3,2 | 1,5 | 0,93 | 81 | 129 | 74 |
| 6 | 3,6. 10⁻⁴ | 0,6 | 3,0 | 0,4 | 0,25 | 81 | 110 | 71 |

### Exemple 2 (comparatif) :

Dans cet exemple, le rapport molaire P/Mo est non conforme à l'invention.

Le tableau 3 résume les caractéristiques des catalyseurs ainsi que les sélectivités et les activités obtenues.

**Tableau 3 : Caractéristiques et performances sur charge modèle des catalyseurs comparatifs.**

| Catalyseur | Densité g MoO₃/m² | % pds CoO | % pds MoO₃ | % pds P₂O₅ | P/Mo mol/mol | S BET du support m²/g | K_{HDS}/k_{HDO} | k_{HDS} |
|---|---|---|---|---|---|---|---|---|
| 7 | 3,9.10⁻⁴ | 1,1 | 3,1 | 0 | 0 | 81 | 99 | 71 |
| 8 | 3,7.10⁻⁴ | 0,6 | 3,0 | 0,2 | 0,16 | 81 | 108 | 71 |

### Exemple 3 (comparatif):

Le catalyseur 9 n'est pas conforme à l'invention de par sa densité en molybdène trop élevé. Le tableau 4 donne ses caractéristiques ainsi que son activité et sa sélectivité.

**Tableau 4 : Caractéristiques et performances sur charge modèle des catalyseurs comparatifs**

| Catalyseur | Densité g MoO₃/m² | % pds CoO | % pds MoO₃ | % pds P₂O₅ | P/Mo mol/mol | S BET du support m²/g | K_{HDS}/k_{HDO} | k_{HDS} |
|---|---|---|---|---|---|---|---|---|
| 9 | 19,5.10⁻⁴ | 3,3 | 15,8 | 3,8 | 0,48 | 81 | 130 | 66 |

### Exemple 4 : test sur charge réelle

Les catalyseurs rassemblés dans le tableau 5, ont été testés sur charge réelle en lit traversé. La température, indiquée dans le tableau 5, est ajustée pour obtenir une conversion en hydrodésulfuration proche de 94 %.

Les catalyseurs 1 et 8, qui contiennent peu ou pas de phosphore sont non conformes à la présente invention. Ils présentent des sélectivités faibles alors que les catalyseurs 6 et 10, conformes à l'invention, présentent de meilleures sélectivités. Tableau

**5 : Caractéristiques et performances des catalyseurs testés sur une essence de craquage catalytique.**

| Catalyseur | Densité g MoO₃/m² | % pds CoO | % pds MoO₃ | % pds P₂O₅ | P / Mo mol/mol | S BET du support m²/g | Conforme | T °C | K_{HDS}/K_{HDO} |
|---|---|---|---|---|---|---|---|---|---|
| 1 (Référence) | 7,6. 10⁻⁴ | 2,9 | 10,3 | 0 | 0 | 135 | non | 265 | 100 |
| 10 | 12,6. 10⁻⁴ | 2,2 | 10,2 | 2,8 | 0,55 | 81 | oui | 270 | 173 |
| 6 | 3,6. 10⁻⁴ | 0,6 | 3,0 | 0,4 | 0,25 | 81 | oui | 275 | 128 |
| 8 | 3,7.10⁻⁴ | 0,6 | 3,0 | 0,2 | 0,16 | 81 | non | 275 | 103 |

## Revendications

1. Catalyseur comprenant au moins un support, du molybdène, du cobalt et du phosphore dans lequel la densité en molybdène par unité de surface du support est comprise (bornes incluses) entre 3.10⁻⁴ et 14.10⁻⁴ g d'oxydes de molybdène par m² de support, dans lequel le rapport molaire phosphore sur molybdène est compris (bornes incluses) entre 0,27 et 2,00, dans lequel la teneur en molybdène est comprise (bornes incluses) entre 1 et 20 % poids d'oxydes de molybdène, la teneur en cobalt est comprise (bornes incluses) entre 0,3 et 5 % poids d'oxydes de cobalt, la teneur en phosphore est comprise (bornes incluses) entre 0,2 et 5 % poids de P₂O₅, dans lequel le support du catalyseur comprend au moins 90 % poids d'alumine de transition et le support a une surface spécifique inférieure à 100 m²/g.

2. Procédé d'hydrodésulfuration de coupes essences en présence d'un catalyseur selon la revendication 1.

3. Procédé selon la revendication 2 dans lequel la charge à hydrodésulfurer est une coupe essence contenant du soufre issue d'une unité de cokéfaction, de viscoréduction, de vapocraquage, ou de craquage catalytique.

4. Procédé selon l'une des revendications 2 ou 3 dans lequel la charge à hydrodésulfurer est une coupe essence issue d'une unité de craquage catalytique dont la gamme de points d'ébullition s'étend des points d'ébullition des hydrocarbures à 5 atomes de carbone jusqu'à environ 250°C.

5. Procédé selon l'une des revendications 2 à 4 dans lequel les conditions opératoires d'hydrodésulfuration sont une température comprise entre 200 et 400°C, une pression totale comprise entre 1 MPa et 3 MPa, et un ratio volume d'hydrogène par volume de charge hydrocarbonée, compris entre 100 et environ 600 litres par litre.

## Patentansprüche

1. Katalysator, umfassend mindestens einen Träger, Molybdän, Kobalt und Phosphor, wobei die Dichte an Molybdän pro Oberflächeneinheit des Trägers (Grenzen eingeschlossen) zwischen 3.10⁻⁴ und 14.10⁻⁴ g Molybdänoxide pro m² Träger liegt, wobei das Molverhältnis von Phosphor zu Molybdän (Grenzen eingeschlossen) zwischen 0,27 und 2,00 liegt, wobei der Gehalt an Molybdän (Grenzen eingeschlossen) zwischen 1 und 20 Gew.-% Molybdänoxide liegt, wobei der Gehalt an Kobalt (Grenzen eingeschlossen) zwischen 0,3 und 5 Gew.-% Kobaltoxide liegt, wobei der Gehalt an Phosphor (Grenzen eingeschlossen) zwischen 0,2 und 5 Gew.-% P₂O₅ liegt, wobei der Träger des Katalysators mindestens 90 Gew.-% Übergangs-Aluminiumoxid umfasst, und wobei der Träger eine spezifische Oberfläche kleiner 100 m²/g aufweist.

2. Verfahren zur Hydroentschwefelung von Benzinfraktionen in Anwesenheit eines Katalysators nach Anspruch 1.

3. Verfahren nach Anspruch 2, wobei die Charge, die einer Hydroentschwefelung zu unterziehen ist, eine Benzinfraktion ist, die Schwefel aus einer Verkokungs-, aus einer Visbreaking-, aus einer Dampfkrack- oder aus einer katalytischen Krack-Einheit enthält.

4. Verfahren nach einem der Ansprüche 2 oder 3, wobei die Charge, die einer Hydroentschwefelung zu unterziehen ist, eine Benzinfraktion ist, die aus einer katalytischen Krack-Einheit stammt, deren Bereich von Siedepunkten sich von den Siedepunkten von Kohlenwasserstoffen mit 5 Kohlenstoffatomen bis ungefähr 250 °C erstreckt.

5. Verfahren nach einem der Ansprüche 2 bis 4, wobei die Betriebsbedingungen der Hydroentschwefelung eine Temperatur zwischen 200 und 400 °C, ein Gesamtdruck zwischen 1 MPa und 3 MPa und ein Volumenverhältnis von Wasserstoff pro Volumen der Kohlenwasserstoffcharge zwischen 100 und ungefähr 600 Liter pro Liter ist.

## Claims

1. A catalyst comprising at least one support, molybdenum, cobalt and phosphorus , in which the molybdenum density per unit surface area of support is in the range (limits included) 3 x 10⁻⁴ to 14 x 10⁻⁴ grams of molybdenum oxides per m² of support, in which the molar ratio of phosphorus to molybdenum is in the range (limits included) 0.27 to 2.00, in which the molybdenum content is in the range (limits included) 1% to 20% by weight of oxides of molybdenum, the cobalt content is in the range (limits included) 0.3% to 5% by weight of cobalt oxides, the phosphorus content is in the range (limits included) 0.2% to 5% by weight of P₂O₅, in which the catalyst support comprises at least 90% by weight of transition alumina and the support has a specific surface area of less than 100 m²/g.

2. A process for hydrodesulphurizing gasoline cuts in the presence of a catalyst according to claim 1.

3. A process according to claim 2, in which the feed to be hydrodesulphurized is a gasoline cut containing sulphur derived from a coking unit, visbreaking unit, steam cracking unit or catalytic cracking unit.

4. A process according to claim 2 or 3, in which the feed for hydrodesulphurization is a gasoline cut derived from a catalytic cracking unit the boiling point range of which extends from the boiling points of hydrocarbons containing 5 carbon atoms to about 250°C.

5. A process according to one of claims 2 to 4, in which the hydrodesulphurization operating conditions are a temperature in the range 200°C to 400°C, a total pressure in the range 1 MPa to 3 MPa, and a ratio of the volume of hydrogen per volume of hydrocarbon feed in the range 100 to about 600 litres per litre.
